# EUROPEAN PATENT SPECIFICATION

(11) **EP 4 366 022 B1**
(45) Date of publication and mention of the grant of the patent: **02.12.2026**
(21) Application number: 23816367.9
(22) Date of filing: 31.05.2023
(51) Int. Cl.: H01M 10/0565, H01M 10/0564, H01M 10/052, C08J 5/22, H01M 10/0525, H01M 10/056

(54) **SOLID POLYMER ELECTROLYTE LAMINATE AND METHOD FOR MANUFACTURING SAME**
FESTPOLYMERELEKTROLYTLAMINAT UND VERFAHREN ZUR HERSTELLUNG DAVON
STRATIFIÉ D'ÉLECTROLYTE POLYMÈRE SOLIDE ET SON PROCÉDÉ DE FABRICATION

(30) Priority: 31.05.2022 KR 20220067054
(43) Date of publication of application: 08.05.2024
(73) Proprietor: LG Energy Solution, Ltd., Seoul 07335 (KR)
(72) Inventor: NAM, Sunghyun, Daejeon 34122 (KR); HAN, Hyeaeun, Daejeon 34122 (KR); KIM, Dong Kyu, Daejeon 34122 (KR)
(74) Representative: Goddar, Heinz J.
(86) International application number: PCT/KR2023/007467
(87) International publication number: WO 2023/234707

(56) References cited:
- CN-A- 110 581 315
- KR-A- 20160 130 782
- KR-A- 20180 076 709
- KR-A- 20190 062 228
- KR-A- 20200 034 284
- YIN JUANJUAN ET AL: "MXene-based film electrode and all-round hydrogel electrolyte for flexible all-solid supercapacitor with extremely low working temperature", CELL REPORTS PHYSICAL SCIENCE, vol. 3, no. 5, 1 May 2022 (2022-05-01), pages 100893, XP093115545, ISSN: 2666-3864, DOI: 10.1016/j.xcrp.2022.100893
- CHEN LI ET AL: "A PVA/LiCl/PEO interpenetrating composite electrolyte with a three-dimensional dual-network for all-solid-state flexible aluminum-air batteries", RSC ADVANCES, vol. 11, no. 62, 1 January 2021 (2021-01-01), GB, pages 39476 - 39483, XP093286056, ISSN: 2046-2069, DOI: 10.1039/D1RA07180G
- YIN JUANJUAN, WEI KUO, ZHANG JIAXIN, LIU SHIDE, WANG XINLIANG, WANG XIAOMING, ZHANG QINGRUI, QIN ZHIHUI, JIAO TIFENG: "MXene-based film electrode and all-round hydrogel electrolyte for flexible all-solid supercapacitor with extremely low working temperature", CELL REPORTS PHYSICAL SCIENCE, vol. 3, no. 5, 1 May 2022 (2022-05-01), pages 100893, XP093115545, ISSN: 2666-3864, DOI: 10.1016/j.xcrp.2022.100893

## Description

### [Technical Field]

The present invention relates to a polymer solid electrolyte laminate and a method for manufacturing the same.

### [Background Art]

Since a lithium secondary battery using a liquid electrolyte has a structure in which the negative electrode and the positive electrode are partitioned by a separator, if the separator is damaged by deformation or external impact, a short circuit may occur, which may lead to dangers such as overheating or explosion. Therefore, it can be said that the development of a solid electrolyte that can secure safety in the field of the lithium secondary battery is a very important task.

A lithium secondary battery using a solid electrolyte has advantages in that the safety of the battery is increased, and the leakage of the electrolyte solution can be prevented, thereby improving the reliability of the battery and making it easy to manufacture a thin battery. In addition, since lithium metal can be used as a negative electrode, energy density can be improved, and accordingly, it is expected to be applied to high-capacity secondary batteries for electric vehicles, in addition to small secondary batteries, and is in the limelight as a next-generation battery.

Polymer materials with ion conductivity can be used as raw materials for polymer solid electrolytes, among solid electrolytes, and hybrid materials formed by mixing polymer materials and inorganic materials are also proposed. As the inorganic material, an inorganic material such as oxide or sulfide may be used.

Such a conventional polymer solid electrolyte was prepared through a high-temperature drying process after forming a coating film. However, the conventional preparation technology for the polymer solid electrolyte has limitations in that it is difficult to prepare the polymer solid electrolyte with improved ionic conductivity due to the high crystallinity of the crystalline polymer or semi-crystalline polymer. In other words, the higher the crystallization degree of the polymer, the lower the mobility of the polymer chain. Accordingly, it was difficult to improve the ionic conductivity of the polymer solid electrolyte because there was a limitation in the movement of lithium ions inside the polymer solid electrolyte.

For example, conventional polymer solid electrolytes can be prepared by forming a coating film using polyvinyl alcohol (PVA) containing a hydroxyl group, which is a cross-linkable functional group, as a polymer, and then performing a high-temperature drying process. Specifically, after preparing a PVA aqueous solution by dissolving the PVA in water, the PVA aqueous solution is applied on a substrate by solution casting to form a coating film, and dried at room temperature or high temperature to form a polymer solid electrolyte in the form of a PVA film. At this time, the high temperature may mean 80 °C or higher, which is the glass transition temperature (Tg) of PVA. In the drying process, after the moisture evaporates, a hydrogen bond between the cross-linkable functional groups contained in the PVA is formed, and polymer chain folding occurs due to the hydrogen bond, and thus the crystallization degree of the polymer film increases. As the degree of crystallization increases, a polymer film with brittleness is formed. In polymer films with high degree of crystallization and brittleness, as the polymer chain mobility decreases, when there are dissociated ions inside the polymer film, a phenomenon in which the ionic mobility is also remarkably reduced occurs. For this reason, the general PVA film prepared by the high-temperature drying process after forming the coating film as described above exhibits physical properties that are not suitable as polymer solid electrolytes for lithium secondary batteries.

In order to overcome these limitations of conventional polymer solid electrolytes, a technique has been developed to improve the mobility of the polymer chain and improve the ionic conductivity of the polymer solid electrolyte by adding a plasticizer to a crystalline polymer or semi-crystalline polymer. However, when a plasticizer is used, it may be difficult to set process conditions because appropriate dispersibility and solubility (miscibility) between the polymer and the plasticizer must be secured. In addition, when a liquid plasticizer is applied, compatibility with the polymer is reduced, and it may be difficult to perform the preparation process of the polymer solid electrolyte.

Accordingly, there is a demand for technology development that can improve the ionic conductivity of polymer solid electrolytes without additional additives such as plasticizers.

In addition, demands for development of a technology capable of, while going through all processes for preparing a polymer solid electrolyte, preventing changes in the physical properties of the polymer solid electrolyte caused by moisture and outside air are also increasing.

### [Prior Art Document]

### [Patent Document]

(Patent Document 1) Chinese Laid-open Patent Publication No. 112259788

Cell Reports Physical Science, vol. 3, no. 5, page 100893, discloses a solid polymer electrolyte for energy storage devices based on PVA having a Mw of 145,000 g/mol. PVA/LiCl hydrogels are fabricated by repeated freeze-thaw processes of PVA/LiCl aqueous solution.

RSC Advances, vol. 11, no. 62, pages 39476-39483, discloses a secondary all solid state battery containing a polymer electrolyte prepared using PVA hydrogels fabricated by freeze-thaw processes.

CN 110581315 A discloses a manufacture of PVA based electrolyte membranes for lithium batteries. The membranes are obtained by multiple freezing and thawing cycles. The molecular weight is 60,000 to 150,000 g/mol.

KR 2016 0130782 A discloses a solid electrolyte membrane comprising a solid electrolyte membrane and a protection sheet for covering the solid electrolyte membrane, wherein the solid electrolyte membrane includes a polymer compound, a lithium salt and a solvent.

### [Disclosure]

### [Technical Problem]

It is an object of the present invention to provide a polymer solid electrolyte laminate capable of, during a process for preparing a polymer solid electrolyte, preventing changes in the physical properties of the polymer solid electrolyte caused by moisture and outside air.

It is another object of the present invention to provide a method for preparing the polymer solid electrolyte laminate.

### [Technical Solution]

In order to achieve the above objects, one embodiment of the present invention provides a polymer solid electrolyte laminate, including: a polymer solid electrolyte including a polymer containing a cross-linkable functional group, a lithium salt and a solvent; and a protective layer formed on at least one surface of the polymer solid electrolyte, wherein the polymer solid electrolyte includes a cross-linked structure; and an amorphous polymer chain containing the cross-linkable functional group, and the cross-linked structure includes (a) a cross-linkage between the cross-linkable functional groups, (b) a cross-linkage between the cross-linkable functional group and the solvent, and (c) a bond between the cross-linkable functional group and the lithium salt,
the solvent comprises water;
the weight average molecular weight (Mw) of the polymer containing a cross-linkable functional group is 80,000 g/mol to 130,000 g/mol;
the cross-linkable functional group comprises a hydroxyl group, and the polymer containing a cross-linkable functional group comprises one or more selected from the group consisting of polyvinyl alcohol (PVA), agar, dextran, and chitosan; and
the molar ratio ([Li]/[G]) of the cross-linkable functional group ([G]) of the polymer and lithium ([Li]) of the lithium salt is exceeding 0.1 and less than 0.5.

Another embodiment of the present invention provides a method for preparing the polymer solid electrolyte laminate of the invention, including the steps of: (S1) forming a solution for forming a polymer solid electrolyte by adding a lithium salt to a polymer solution containing a cross-linkable functional group; (S2) forming a coating film by coating the solution for forming a polymer solid electrolyte on a substrate; (S3) forming a polymer solid electrolyte by freezing and thawing the coating film; and (S4) laminating a protective layer on at least one surface of the polymer solid electrolyte,
wherein the freezing is performed at -30°C to -10°C, and
the thawing is performed at 15°C to 35°C.

Further embodiments are disclosed in the dependent claims.

### [Advantageous Effects]

A polymer solid electrolyte laminate according to the present invention includes a protective layer formed on at least one surface of a polymer solid electrolyte, and the protective layer is capable of, in a continuous process of going on to a lamination process with an electrode after preparing the polymer solid electrolyte and processes such as transportation, preventing changes in the physical properties of the polymer solid electrolyte caused by moisture and the outside air.

### [Best Mode]

Hereinafter, the present invention will be described in more detail to help the understanding of the present invention.

The terms and words used in the present specification and claims should not be construed as limited to ordinary or dictionary terms, and should be construed in a sense and concept consistent with the technical idea of the present invention, based on the principle that the inventor can properly define the concept of a term to describe his invention in the best way possible.

As used herein, the term "cross-linked structure" refers to a structure comprising a three-dimensional frame formed by polymer chains and an internal space of the frame. The polymer chain may be formed by cross-linkages comprising cross-linkable functional groups contained in the polymer. Since the cross-linked structure has a three-dimensional shape and has a form in which polymer chains are entangled with each other, it can also be referred to as a three-dimensional network structure.

### Polymer Solid Electrolyte Laminate

The present invention relates to a polymer solid electrolyte laminate.

The polymer solid electrolyte laminate according to the present invention includes a polymer solid electrolyte including a polymer containing a cross-linkable functional group, a lithium salt, and a solvent; and a protective layer formed on at least one surface of the polymer solid electrolyte. In addition, the polymer solid electrolyte includes a cross-linked structure; and an amorphous polymer chain containing the cross-linkable functional group, and the cross-linked structure includes (a) a cross-linkage between cross-linkable functional groups, (b) a cross-linkage between the cross-linkable functional group and the solvent, and (c) a bond between the cross-linkable functional group and the lithium salt. Specifically, the amorphous polymer chain and the lithium salt are included in an inner space formed in the cross-linked structure, and the lithium salt is included in a dissociated state.

In addition, the cross-linked structure may be formed in a freezing process as to be described later. In the freezing process, some of the cross-linkable functional groups included in the polymer form localized crystallites, and the cross-linked structure may be formed by the localized crystallites acting as a cross-linkable junction point and a cross-linkage. In this case, the crystallite means a shape like a knot made by tangled threads, unlike a crystal structure formed by polymer chain folding.

In the present invention, the protective layer may be formed on at least one surface of the polymer solid electrolyte to play a role to protect the polymer solid electrolyte from mechanical friction or physical damage during the preparing process of a battery to which the polymer solid electrolyte is applied, and also play a role to prevent a phenomenon in which physical properties of the polymer solid electrolyte are changed due to moisture and outside air.

During the battery manufacturing process, when the polymer solid electrolyte needs to be handled under an environment in which moisture is well blocked, a protective layer capable of protecting the polymer solid electrolyte from simple mechanical friction or damage is sufficient. At this time, the protective layer may have greater mechanical strength compared to the polymer solid electrolyte. The mechanical strength may mean modulus.

The protective layer may be a polymer film having relatively large modulus compared to the polymer solid electrolyte, or a low-hygroscopic polymer film.

The polymer film having relatively large modulus compared to the polymer solid electrolyte may include a polyester film, a polycarbonate (PC) film, a polyethylene (PE) film, a polymethyl methacrylate (PMMA) film, a polyetheretherketone (PEEK) film, a polyethylene naphthalate (PEN) film, a polyetherimide (PEI) film, a polyimide (PI) film, a triacetylcellulose (TAC) film, or an elongated polyvinyl alcohol (PVA) film, and
the low-hygroscopic polymer film may include a cycloolefin polymer (COP) film, a polyethylene terephthalate (PET) film, a polyacrylate (PAC) film, a polyethylene naphthalate (PEN) film, a polyvinylidene chloride (PVDC) film, a polyvinyl chloride (PVC) film, or an ethylene vinyl alcohol copolymer (EVOH) film.

In addition, the low-hygroscopic polymer film may have excellent moisture barrier properties.

The protective layer is not particularly limited as long as it has properties of moisture barrier and/or low moisture permeability. For example, the protective layer may have a water vapor transmission rate (WVTR) of 50 g/m²·day or less, 40 g/m²·day or less, 30 g/m²·day or less, 20 g/m²·day or less, or 10 g/m²·day or less. When the protective layer has a water vapor transmission rate of 50 g/m²·day or less, an effect of preparing the polymer solid electrolyte under an environment in which moisture is almost blocked is shown. In this case, ionic conductivity is not lost even when exposed to an external environment such as moisture, and the prepared polymer solid electrolyte may exhibit lithium-specific ionic conductivity.

On the other hand, if the protective layer has a water vapor transmission rate exceeds 50 g/m²·day, the function of protecting the polymer solid electrolyte from moisture and/or outside air may be reduced, however, due to the influence of the moisture, the polymer solid electrolyte may rather have higher ionic conductivity. The reason why the polymer solid electrolyte has high ionic conductivity when the protective layer has high water vapor transmission rate is that, in addition to ionic conductivity by lithium ions, ionic conductivity by the protons (H⁺) of the absorbed moisture (proton hopping), that is, ionic conductivity by moisture is added thereto.

Generally, in order for ionic conductivity of a polymer solid electrolyte to be directly involved in improving actual battery performance, it is preferable that the ionic conductivity is the ionic conductivity exhibited by lithium ions. If the ionic conductivity of the polymer solid electrolyte is exhibited by moisture, its contribution to improving actual battery performance is insignificant or almost none.

Accordingly, since the high ionic conductivity of the polymer solid electrolyte exhibited when the protective layer included in the polymer solid electrolyte has high water vapor transmission rate is not ionic conductivity obtained only by lithium ions, it may be an ionic conductivity having an insignificant influence on improving actual battery performance. In other words, since the water content increases in a state where the water vapor transmission rate of the protective layer is high, the ionic conductivity is increased by the moisture, which is not ionic conductivity by lithium ions relevant to actual battery performance.

A method for measuring the water vapor transmission rate is not particularly limited as long as it is a method that may be applied for measuring a water vapor transmission rate of an object to be measured having a shape similar to a film in the art. For example, the water vapor transmission rate may be measured using an Aquatron apparatus manufactured by Mocon company. In the apparatus, after fixing a film between two chambers, while introducing moisture into one chamber, nitrogen is flowed into the opposite chamber, thereby measuring the nitrogen concentration in the moisture passing through the film may be measured.

In addition, the protective layer may include one or more selected from the group consisting of a cycloolefin polymer (COP) film, a polyethylene terephthalate (PET) film, a polyacrylate (PAC) film, a polyethylene naphthalate (PEN) film, a polyvinylidene chloride (PVDC) film, a polyvinyl chloride (PVC) film, and an ethylene vinyl alcohol copolymer (EVOH) film. These films may be a polymer film having a non-porous structure.

Generally, in a polymer film having a non-porous structure, permeability of moisture or gas is known to be affected by a chemical structure and/or the degree of crystallinity of the polymer forming the film. In addition, the inside of the polymer is divided into a crystalline region and an amorphous region, and gas permeation mostly occurs in the amorphous region. In the inside of the amorphous region, there exist a lot of free volumes larger than the size of the permeating gas molecules, which enables active movements of the gas molecules, facilitating gas permeation in the polymer film. The gas permeation mechanism in the polymer film may be divided into a process in which the gas molecules are dissolved into the film, and a process in which the gas molecules are diffused into the film.

Accordingly, a gas permeability coefficient (P) of the polymer film may be expressed as a product of a solubility constant (S) and a diffusion coefficient (D) as in the following Equation 1. [Equation 1] $P = S ⋅ D$

In this case, in order for the polymer film to have properties of moisture barrier and/or low moisture permeability, it may be preferred that the solubility constant (S) and/or the diffusion coefficient (D) are low, resulting in a low gas permeability coefficient (P) value, and these physical properties may be affected by functional group types, bonding strength, the degree of crystallinity, polarity, orientation and the like.

Accordingly, the present invention may provide a polymer solid electrolyte laminate capable of, by introducing a polymer film having a low water vapor transmission rate (WVTR) as a protective layer of a polymer solid electrolyte, protecting ionic conductivity and mechanical properties of the polymer solid electrolyte.

The polymer solid electrolyte according to the present invention includes a polymer containing a cross-linkable functional group and a lithium salt.

In addition, the polymer solid electrolyte has a structure including a cross-linked structure; and an amorphous polymer chain containing the cross-linkable functional group, and the cross-linked structure includes (a) a cross-linkage between the cross-linkable functional groups, (b) a cross-linkage between the cross-linkable functional group and the solvent, and (c) a bond between the cross-linkable functional group and the lithium salt. Specifically, the amorphous polymer chain and the lithium salt are included in an inner space formed in the cross-linked structure, and the lithium salt is included in a dissociated state.

In the present invention, (a) the cross-linkage between cross-linkable functional groups may comprise a hydrogen bond between cross-linkable functional groups, and for example, the hydrogen bond may be a hydrogen bond between OH- groups.

If the cross-linked structure is formed only by (a) the cross-linkage between cross-linkable functional groups, crystallinity of the polymer solid electrolyte may be generated, and thus ionic conductivity may be reduced.

However, since the cross-linked structure comprise not only (a) the cross-linkage between cross-linkable functional groups, but also (b) the cross-linkage between the cross-linkable functional group and the solvent, and (c) the bond between the cross-linkable functional group and the lithium salt, the generation of crystallinity of the polymer solid electrolyte can be prevented.

In the present invention, (b) the cross-linkage between the cross-linkable functional group and the solvent may comprise a hydrogen bond, for example, the hydrogen bond may be a hydrogen bond between OH- and H+. At this time, H+ may be derived from a water solvent.

(b) the cross-linkage between the cross-linkable functional group and the solvent may mean a hydrogen bond between a part of the solvent remaining in the freezing and thawing processes and the cross-linkable functional group.

In addition, (b) the cross-linkage between the cross-linkable functional group and the solvent interferes with the cross-linkage between (a) the cross-linkable functional groups, so that the cross-linked structure does not consist only of the cross-linkage between (a) the cross-linkable functional groups, and thus the increase in crystallinity of the polymer solid electrolyte can be prevented.

In the present invention, (c) the bond between the cross-linkable functional group and the lithium salt may comprise a bond by Lewis acid-base interaction, and for example, the bond may be a bond between OH- and Li+.

(c) the bond between the cross-linkable functional group and the lithium salt is a bond by Lewis acid-base interaction, and may be a type of bond such as a metal-ligand bond.

In addition, (c) the bond between the cross-linkable functional group and the lithium salt interferes with (a) the cross-linkage between cross-linkable functional groups and (b) the cross-linkage between the cross-linkable functional group and the solvent, so that the cross-linked structure does not consist only of the cross-linkage between (a) the cross-linkable functional groups, and thus the generation of crystallinity of the polymer solid electrolyte can be prevented, and at the same time, the formation of amorphous polymer chains can be promoted. As the amorphous polymer chain is formed, the mobility of the polymer chain is improved, and thus the hopping effect of the lithium ion is increased, so that the ionic conductivity of the polymer solid electrolyte can be improved.

In the present invention, the amorphous polymer chain may also be formed in a freezing process as described later, and refers to a polymer chain that does not form crystals by regular folding of the polymer chain and exists in a free behavior state. That is, the amorphous polymer chain may include a polymer containing a cross-linkable functional group that does not form bonds as in (a), (b) and (c).

Due to the cross-linked structure, the polymer solid electrolyte is not easily broken or destroyed and thus can play a role as a support for an electrolyte containing lithium ions stably.

In addition, due to the amorphous polymer chain, since the polymer solid electrolyte exhibits elasticity, it can minimize brittleness, which is a property of being easily broken, and since the mobility of the polymer chain is excellent and the mobility of lithium ions inside the electrolyte is improved, the polymer solid electrolyte with improved ionic conductivity can be provided.

In the present invention, the cross-linkable functional group contained in the polymer containing the cross-linkable functional group may have a property capable of forming a cross-linked structure by forming bonds as in the (a), (b) and (c).

The cross-linkable functional group includes a hydroxyl group.

In addition, the weight average molecular weight (Mw) of the polymer containing the cross-linkable functional group is 80,000 g/mol to 130,000 g/mol, and specifically, may be 80,000 g/mol or more, 83,000 g/mol or more or 85,000 g/mol or more, and 90,000 g/mol or less, 110,000 g/mol or less or 130,000 g/mol or less. If the weight average molecular weight (Mw) of the polymer containing the cross-linkable functional group is less than 80,000 g/mol, the bond by the cross-linkable functional group may not be formed sufficiently to obtain a cross-linked structure. If the weight average molecular weight (Mw) of the polymer containing the cross-linkable functional group exceeds 130,000 g/mol, the entanglement of the polymer chain is increased in the polymer solution used in the preparation process, and the penetration rate of the solvent into the polymer chain is decreased. Accordingly, gelation of the polymer is accelerated, and thus the solubility of the polymer is lowered and the bonding by the cross-linkable functional group cannot be performed smoothly, so the formation of a cross-linked structure may not be easy.

In addition, the polymer containing the cross-linkable functional group may have characteristic in that the bonds (a), (b) and (c) are well formed by the cross-linkable functional group contained in the phase separated polymer upon freezing because phase separation between the polymer and the solvent is smoothly performed in the polymer solution used in the preparation process.

Preferably, the polymer containing the cross-linkable functional group may be PVA, and the PVA can be efficiently phase separated from the solvent upon freezing in the preparation process of the polymer solid electrolyte and it may be advantageous in forming a cross-linked structure by the bonds (a), (b) and (c) induced from the cross-linkable functional group of PVA phase separated from the solvent.

In the present invention, the lithium salt is included in a dissociated state in the inner space of the cross-linked structure, thereby improving the ionic conductivity of the polymer solid electrolyte.

In addition, the lithium salt can form (c) the bond between the cross-linkable functional group and the lithium salt, thereby preventing the generation of crystallinity of the polymer solid electrolyte and promoting the formation of an amorphous polymer chain at the same time.

The lithium salt may include one or more selected from the group consisting of (CF₃SO₂)₂NLi(Lithium bis(trifluoromethanesulphonyl)imide, LiTFSI), (FSO₂)₂NLi(Lithium bis (fluorosulfonyl)imide, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, and LiC(CF₃SO₂)₃.

In the present invention, the molar ratio ([Li]/[G]) of the cross-linkable functional group ([G]) of the polymer containing the cross-linkable functional group and lithium ([Li]) of the lithium salt contained in the polymer solid electrolyte is exceeding 0.1 and less than 0.5, and specifically may be exceeding 0.1, 0.2 or more, or 0.3 or more, and may be 0.4 or less, or 0.5 or less. If the molar ratio ([Li]/[G]) is 0.1 or less, as the content of the lithium salt is reduced, the ionic conductivity of the polymer solid electrolyte may be lowered. If the molar ratio ([Li]/[G]) is 0.5 or more, the content of the polymer containing the cross-linkable functional group is reduced, so that the bonds (a), (b) and (c) may not be sufficiently formed and thus crystallinity may be increased and ionic conductivity may be decreased. If the cross-linkable functional group is a hydroxyl group (OH-), the [G] may be expressed as [OH] or [O].

In the present invention, the polymer solid electrolyte may be in the form of a free-standing film or a coating layer. The free-standing film refers to a film capable of maintaining a film shape by itself without a separate support at room temperature and pressure. The coating layer means a layer obtained by coating on a substrate. If the polymer solid electrolyte is in the form of a coating layer, the coating layer may be in the form of a layer coated on an electrode.

The free-standing film or coating layer exhibits elasticity to minimize brittleness and has characteristics as a support that stably contains lithium ions, and thus it can be in a suitable form as a polymer solid electrolyte.

In the present invention, the polymer solid electrolyte may further include a liquid electrolyte, and by the liquid electrolyte, ionic conductivity of the polymer solid electrolyte may be further improved. The liquid electrolyte may also be included in an inner space of the cross-linked structure.

The liquid electrolyte may be a liquid electrolyte commonly used in the art, and the composition of the liquid electrolyte is not particularly limited as long as it is usable in a lithium secondary battery. For example, the liquid electrolyte may include a lithium salt and a non-aqueous solvent. The lithium salt may be one of the lithium salts described above. In addition, the non-aqueous solvent may include one or more selected from the group consisting of propylene carbonate (PC), ethylene carbonate (EC), vinylene carbonate (VC), diethyl carbonate (DEC), dimethyl carbonate (DMC), methylethyl carbonate (MEC), ethylmethyl carbonate (EMC), tetrahydrofuran (THF), 2-methyltetrahydrofuran (2MeTHF), dioxolane (DOX), dimethoxyethane (DME), diethoxyethane (DEE), γ-butyrolactone (GBL), acetonitrile (AN) and sulfolane.

In addition, the liquid electrolyte may be included in an amount of 1% by weight to 5% by weight based on the total weight of the polymer solid electrolyte. When the liquid electrolyte content is 1% by weight or less, the effect of improving ionic conductivity may be insignificant, and when the content exceeds 5% by weight, stability may be reduced.

The polymer solid electrolyte as described above may be prepared in a form including a cross-linked structure formed by the bonds such as the (a), (b) and (c) formed by the cross-linkable functional group contained in the polymer and an amorphous polymer chain including a polymer having a cross-linkable functional group with no cross-linkage. Due to such morphological properties, the polymer solid electrolyte is capable of performing a role of a support stably containing lithium ions, minimizing brittleness by exhibiting elasticity, and improving ionic conductivity by preventing crystallinity from occurring.

### Method for Preparing Polymer Solid Electrolyte Laminate

The present invention also relates to a method for preparing a polymer solid electrolyte laminate, and the method includes the steps of: (S1) forming a solution for forming a polymer solid electrolyte by adding a lithium salt to a polymer solution including a cross-linkable functional group; (S2) forming a coating film by applying the solution for forming the polymer solid electrolyte on a substrate; (S3) forming the polymer solid electrolyte by freezing and thawing the coating film; and (S4) laminating a protective layer on at least one surface of the polymer solid electrolyte, wherein the freezing is performed at -30°C to -10°C, and
the thawing is performed at 15°C to 35°C.

In the method for preparing the polymer solid electrolyte laminate, a laminate capable of protecting the polymer solid electrolyte from physical contact, or moisture and outside air may be prepared using a simple method of laminating a protective layer on at least one surface of the polymer solid electrolyte.

In addition, in the process for preparing the polymer solid electrolyte, (a) a cross-linkage between the cross-linkable functional groups, (b) a cross-linkage between the cross-linkable functional group and the solvent, and (c) a bond between the cross-linkable functional group and the lithium salt by the cross-linkable functional group contained in the polymer are induced through a freezing process, without adding a plasticizer used for reducing polymer crystallinity, thereby preventing the crystallization of the polymer, and as a result, the polymer solid electrolyte with improved ionic conductivity may be prepared.

Hereinafter, the method for preparing a polymer solid electrolyte according to the present invention will be described in more detail for each step.

In the present disclosure, in the step (S1), a solution for forming a polymer solid electrolyte can be prepared by adding a lithium salt to a polymer solution containing the cross-linkable functional group. The types and physical properties of the polymer containing the cross-linkable functional group and the lithium salt are as described above.

The solvent used when preparing the polymer solution may be a polar solvent, and for example, may be water. In other words, the polymer solution may be an aqueous polymer solution.

The concentration of the polymer solution including the cross-linkable functional group can be appropriately adjusted considering the extent to which the coating process can proceed smoothly, when the solution for forming the polymer solid electrolyte is applied to the substrate. For example, the concentration of the polymer solution containing the cross-linkable functional group may be 5% to 20%, and specifically may be 5% or more, 7% or more or 9% or more, and may be 13% or less, 17% or less or 20 % or less. If the concentration of the polymer solution containing the cross-linkable functional group is less than 5%, the concentration is too dilute and thus it may flow down when applied on the substrate. If the concentration of the polymer solution containing the cross-linkable functional group exceeds 20%, it is difficult to dissolve the lithium salt at a desired concentration in the solution of the polymer, and it may be difficult to apply it in the form of a uniform thin film due to its high viscosity.

In the present invention, in the step (S2), a coating film may be formed by applying the solution for forming the polymer solid electrolyte on the substrate.

The substrate is not particularly limited as long as it can serve as a support on which the solution for forming the polymer solid electrolyte is applied. For example, the substrate may be stainless steel (SS), a polyethylene terephthalate film, a polytetrafluoroethylene film, a polyethylene film, a polypropylene film, a polybutene film, a polybutadiene film, a vinyl chloride copolymer film, a polyurethane film, an ethylenevinyl acetate film, an ethylene-propylene copolymer film, an ethylene-ethyl acrylate copolymer film, an ethylene-methyl acrylate copolymer film, or a polyimide film.

In addition, the coating method is not particularly limited as long as it is a method capable of applying the solution for forming the polymer solid electrolyte in the form of a film on the substrate. For example, the coating method may be bar coating, roll coating, spin coating, slit coating, die coating, blade coating, comma coating, slot die coating, lip coating, or solution casting.

In the present invention, in the step (S3), the coating film may be frozen and thawed to form a cross-linked structure. In other words, in the freezing process, the bonds of (a), (b) and (c) are induced by the cross-linkable functional group to form a cross-linked structure, and an amorphous polymer chain may be formed.

In the freezing process, the polymer and water included in the aqueous polymer solution containing the cross-linkable functional group used for forming the coating film may be phase separated. The phase separation may be induced because the strength of the hydrogen bond between the water molecules is stronger than that between the cross-linkable functional group and the water molecules. Water molecules aggregated by hydrogen bonds between the water molecules exist in the ice phase by a freezing process. As a result, the number of cross-linkable functional groups forming hydrogen bonds through interaction with the water molecules is significantly reduced.

In other words, in the freezing process of the coating film, the polymer and water included in the aqueous polymer solution need to be phase separated first, and the phase separation may be induced by the hydrogen bond between the water molecules.

Due to the phase separation, the inside of the coating film is divided into (i) a polymer-poor phase and (ii) a polymer-rich phase.

The (i) polymer-poor phase is a portion containing water molecules aggregated by hydrogen bonds between water molecules and exists as an ice phase, which can also be referred to as a free water state.

The (ii) polymer-rich phase is a portion containing a polymer phase separated from water. The phase-separated polymer is a polymer containing a cross-linkable functional group that is free from interaction with water molecules, and is in a free state after phase separation, does not form crystals by regular folding, and exists in an amorphous state with relatively free behavior, which is called an amorphous polymer chain.

In addition, some of the cross-linkable functional groups contained in the phase separated polymer form localized crystallites. The localized crystallites act as a cross-linkable junction point to form a cross-linked structure including the bonds (a), (b) and (c).

In addition, in the thawing process after the freezing process, the ice contained in the (i) polymer-poor phase melts and evaporates, and thus a polymer solid electrolyte with an increased free volume can be prepared.

In addition, the freezing may be performed by appropriately selecting conditions sufficient to freeze the coating film. The freezing is performed at a temperature of -30 °C to -10 °C, and specifically, the freezing temperature may be -30 °C or higher, -25 °C or higher, or -23 °C or higher, and may be -18 °C or lower, -15 °C or lower or -10 °C or lower. If the freezing temperature is less than -30 °C, cracks may occur in the coating film. If the freezing temperature exceeds -10 °C, formation of amorphous polymer chain region can be difficult because sufficient phase separation between the polymer and water is not achieved. In addition, the freezing may be performed considering a sufficient freezing time within the range of 20 hours to 30 hours.

In addition, the thawing can be performed by appropriately selecting conditions capable of thawing to the extent that the frozen coating film can be applied as a polymer solid electrolyte. The thawing temperature is 15 °C to 35 °C or may be room temperature (25 °C). If the thawing temperature is less than 15 °C, moisture drying efficiency may decrease after thawing (ice melting). If the thawing temperature exceeds 35 °C, the coating film may shrink and thus cause wrinkles or warping.

In addition, in the process of preparation method of the polymer solid electrolyte, the bonds of (a), (b) and (c) are induced without adding a plasticizer used to reduce crystallinity of the polymer, thereby preventing crystallization of the polymer, and as a result, a polymer solid electrolyte with improved ionic conductivity may be prepared.

After the step (S3), a process of loading the polymer solid electrolyte into a liquid electrolyte and then drying the result may be further included. The composition and the content of the liquid electrolyte are the same as described above.

In the present disclosure, in the step (S4), a protective layer may be laminated on at least one surface of the polymer solid electrolyte to obtain a polymer solid electrolyte laminate. The type of the protective layer is the same as described above.

After preparing the polymer solid electrolyte, a process of laminating the polymer solid electrolyte and an electrode is performed as a continuous process. At this time, the continuous process is a continuous process in which the process for preparing the polymer solid electrolyte and the process for laminating the polymer solid electrolyte and an electrode are connected and performed as one line, or a continuous process in which the polymer solid electrolyte prepared by the roll to roll process is wound and temporarily stored, and later, is unwound again and introduced to a lamination process with an electrode.

In the continuous process as above and all process such as transportation, the protective layer may be formed to prevent changes in the physical properties of the polymer solid electrolyte caused by moisture and outside air.

The protective layer may be laminated on at least one surface of the polymer solid electrolyte through a roll-to-roll lamination, and since the polymer solid electrolyte itself has some sticky properties, the protective layer may be attached thereto by adhesive strength of the polymer solid electrolyte itself.

### All-Solid-State Battery

The present invention also relates to an all-solid-state battery including the polymer solid electrolyte, wherein the all-solid-state battery includes an negative electrode, a positive electrode, and a polymer solid electrolyte provided between the negative electrode and the positive electrode, and the solid electrolyte has the properties described above.

Specifically, the polymer solid electrolyte may be suitable as an electrolyte for an all-solid-state battery because physical cross-linkage is formed through the freezing and thawing processes and thus crystallinity is lowered, and ionic conductivity is improved accordingly.

In addition, the protective layer is removed when the polymer solid electrolyte laminate is applied to a battery, and therefore, the protective layer is not included in the all-solid-state battery.

In the present invention, the positive electrode contained in the all-solid-state battery includes a positive electrode active material layer, and the positive electrode active material layer may be formed on one surface of the positive electrode current collector.

The positive electrode active material layer includes a positive electrode active material, a binder, and a conductive material.

In addition, the positive electrode active material is not particularly limited as long as it is a material capable of reversibly intercalating and de-intercalating lithium ions, and for example, may be, but is not limited to, layered compounds or compounds substituted with one or more transition metals, such as lithium cobalt oxide (LiCoO₂), lithium nickel oxide (LiNiO₂), Li[NiₓCo_{y}Mn_{z}Mᵥ]O₂ (wherein, M is any one or two or more elements selected from the group consisting of Al, Ga and In; 0.3≤x<1.0, 0≤y, z≤0.5, 0≤v≤0.1, x+y+z+v=1), Li(LiₐM_{b-a-b'}M'_{b'})O₂-_{c}A_{c} (wherein, 0≤a≤0.2, 0.6≤b≤1, 0≤b'≤0.2, 0≤c≤0.2; M comprises Mn and one or more selected from the group consisting of Ni, Co, Fe, Cr, V, Cu, Zn and Ti; M' is one or more selected from the group consisting of Al, Mg and B, and A is one or more selected from the group consisting of P, F, S and N); lithium manganese oxide such as Formula Li_{1+y}Mn_{2-y}O₄ (wherein, y is 0 - 0.33), LiMnO₃, LiMn₂O₃, LiMnO₂; lithium copper oxide (Li₂CuO₂); vanadium oxide such as LiV₃O₈, LiFe₃O₄, V₂O₅, Cu₂V₂O₇; Ni site type lithium nickel oxide represented by Formula LiNi_{1-y}MyO₂ (wherein, M=Co, Mn, Al, Cu, Fe, Mg, B or Ga, y=0.01 - 0.3); lithium manganese composite oxide represented by Formula LiMn_{2-y}M_{y}O₂ (wherein, M=Co, Ni, Fe, Cr, Zn or Ta, y=0.01 - 0.1) or Li₂Mn₃MO₈ (wherein, M=Fe, Co, Ni, Cu or Zn); LiMn₂O₄ in which part of Li in the Formula is substituted with alkaline earth metal ions; disulfide compounds; and Fe₂(MoO₄)₃.

In addition, the positive electrode active material may be contained in an amount of 40 to 80% by weight based on the total weight of the positive electrode active material layer. Specifically, the content of the positive electrode active material may be 40% by weight or more or 50% by weight or more, and may be 70% by weight or less or 80% by weight or less. If the content of the positive electrode active material is less than 40% by weight, the connectivity between the wet positive electrode active material layer and the dry positive electrode active material layer may be insufficient. If the content of the positive electrode active material exceeds 80 % by weight, mass transfer resistance may be increased.

In addition, the binder is a component that assists bonding between the positive electrode active material and the conductive material, and assists in bonding to the current collector. The binder may comprise one or more selected from the group consisting of styrene-butadiene rubber, acrylated styrene-butadiene rubber, acrylonitrile copolymer, acrylonitrilebutadiene rubber, nitrile butadiene rubber, acrylonitrilestyrene-butadiene copolymer, acrylic rubber, butyl rubber, fluorine rubber, polytetrafluoroethylene, polyethylene, polypropylene, ethylene/propylene copolymer, polybutadiene, polyethylene oxide, chlorosulfonated polyethylene, polyvinylpyrrolidone, polyvinylpyridine, polyvinyl alcohol, polyvinyl acetate, polyepichlorohydrin, polyphosphazene, polyacrylonitrile, polystyrene, latex, acrylic resin, phenolic resin, epoxy resin, carboxymethylcellulose, hydroxypropyl cellulose, cellulose acetate, cellulose acetate butyrate, cellulose acetate propionate, cyanoethyl cellulose, cyanoethyl sucrose, polyester, polyamide, polyether, polyimide, polycarboxylate, polycarboxylic acid, polyacrylic acid, polyacrylate, lithium polyacrylate, polymethacrylic acid, polymethacrylate, polyacrylamide, polyurethane, polyvinylidene fluoride, and poly(vinylidene fluoride)-hexafluoropropene. Preferably, the binder may comprise one or more selected from the group consisting of styrene-butadiene rubber, polytetrafluoroethylene, carboxymethyl cellulose, polyacrylic acid, lithium polyacrylate, and polyvinylidene fluoride.

In addition, the binder may be contained in an amount of 1% by weight to 30% by weight based on the total weight of the positive electrode active material layer, and specifically, the content of the binder may be 1% by weight or more or 3% by weight or more, and may be 15% by weight or less or 30% by weight or less. If the content of the binder is less than 1% by weight, the adhesive force between the positive electrode active material and the positive electrode current collector may be lowered. If the content of the binder exceeds 30% by weight, the adhesive force is improved, but the content of the positive electrode active material is reduced by that amount, and thus the capacity of the battery may be lowered.

In addition, the conductive material is not particularly limited as long as it prevents side reactions in the internal environment of the all-solid-state battery and has excellent electrical conductivity without causing chemical changes in the battery. The conductive material may be typically graphite or conductive carbon, and for example, graphite such as natural graphite, artificial graphite; carbon black such as carbon black, acetylene black, Ketjen black, Denka black, thermal black, channel black, furnace black, lamp black, thermal black; carbonbased materials whose crystal structure is graphene or graphite; conductive fibers such as carbon fibers and metal fibers; carbon fluoride; metal powders such as aluminum powder and nickel powder; conductive whiskers such as zinc oxide and potassium titanate; conductive oxides such as titanium oxide; and conductive polymers such as polyphenylene derivatives may be used alone or in combination of two or more thereof as the conductive material, but is not necessarily limited thereto.

The conductive material may be generally contained in an amount of 0.5% by weight to 30% by weight based on the total weight of the positive electrode active material layer, and specifically, the content of the conductive material may be 0.5% by weight or more or 1% by weight or more, and may be 20% by weight or less or 30% by weight or less. If the content of the conductive material is too small, i.e., less than 0.5 % by weight, it is difficult to expect an effect of improving electrical conductivity or the electrochemical properties of the battery may be deteriorated. If the content of the conductive material exceeds 30% by weight and thus is too large, the amount of the positive electrode active material may be relatively small, so that the capacity and energy density may be lowered. A method for incorporating the conductive material to the positive electrode is not particularly limited, and a conventional method known in the art, such as coating on the positive electrode active material, may be used.

In addition, the positive electrode current collector supports the positive electrode active material layer, and serves to transfer electrons between the external conductive wire and the positive electrode active material layer.

The positive electrode current collector is not particularly limited as long as it has high electrical conductivity without causing chemical changes in the all-solid-state battery. For example, as the positive electrode current collector, copper, stainless steel, aluminum, nickel, titanium, palladium, sintered carbon; a copper or stainless steel surface-treated with carbon, nickel, silver, etc.; an aluminum-cadmium alloy, etc. may be used.

The positive electrode current collector may have a fine irregularity structure on the surface of the positive electrode current collector or have a three-dimensional porous structure, in order to strengthen the bonding force with the positive electrode active material layer. Accordingly, the positive electrode current collector may include various forms such as a film, a sheet, a foil, a mesh, a net, a porous body, a foam, and a non-woven fabric.

The positive electrode as described above may be prepared by the conventional method, and specifically, the positive electrode is manufactured by coating and drying a composition for forming the positive electrode active material layer prepared by mixing the positive electrode active material, the conductive material and the binder in an organic solvent, onto the positive electrode current collector, and optionally compression-molding it onto the current collector to improve the electrode density. At this time, as the organic solvent, it is preferable to use one that can uniformly disperse the positive electrode active material, the binder, and the conductive material and that evaporates easily. Specifically, acetonitrile, methanol, ethanol, tetrahydrofuran, water, isopropyl alcohol and the like are exemplified.

In the present invention, the negative electrode comprised in the all-solid-state battery comprises an negative electrode active material layer, and the negative electrode active material layer may be formed on one surface of the negative electrode current collector.

The negative electrode active material may be a material capable of reversibly intercalating or de-intercalating lithium ion (Li⁺), a material capable of reacting with lithium ion to reversibly form a lithium-containing compound, lithium metal or a lithium alloy.

The material capable of reversibly intercalating or de-intercalating lithium ion (Li⁺) may be, for example, crystalline carbon, amorphous carbon or mixtures thereof. The material capable of reacting with the lithium ion (Li⁺) to reversibly form a lithium-containing compound may be, for example, tin oxide, titanium nitrate, or silicon. The lithium alloy may be, for example, an alloy of lithium (Li) and the metal selected from the group consisting of sodium (Na), potassium (K), rubidium (Rb), cesium (Cs), francium (Fr), beryllium (Be), magnesium (Mg), calcium (Ca), strontium (Sr), barium (Ba), radium (Ra), aluminum (Al), and tin (Sn).

Preferably, the negative electrode active material may be lithium metal, and specifically, may be in the form of a lithium metal thin film or lithium metal powder.

The negative electrode active material may be contained in an amount of 40 to 80% by weight based on the total weight of the negative electrode active material layer. Specifically, the content of the negative electrode active material may be 40 % by weight or more or 50 % by weight or more, and may be 70 % by weight or less or 80 % by weight or less. If the content of the negative electrode active material is less than 40% by weight, the connectivity between the wet negative electrode active material layer and the dry negative electrode active material layer may be insufficient. If the content of the negative electrode active material exceeds 80 % by weight, mass transfer resistance may be increased.

In addition, the binder is the same as described above for the positive electrode active material layer.

In addition, the conductive material is the same as described above for the positive electrode active material layer.

In addition, the negative electrode current collector is not particularly limited as long as it has conductivity without causing chemical change in the battery, and for example, the negative electrode current collector may be copper, stainless steel, aluminum, nickel, titanium, sintered carbon; copper or stainless steel surface-treated with carbon, nickel, titanium, silver, etc.; or aluminum-cadmium alloy. In addition, the negative electrode current collector may be used in various forms, such as a film having fine irregularity on its surface, a sheet, a foil, a net, a porous body, a foam, and a non-woven fabric, as in the positive electrode current collector.

The manufacturing method of the negative electrode is not particularly limited, and may be manufactured by forming an negative electrode active material layer on an negative electrode current collector using a layer or film formation method commonly used in the art. For example, a method such as pressing, coating, or vapor deposition may be used. Also, a case where a thin film of a metal lithium is formed on a metal plate by initial charging after assembling the battery without a lithium thin film on the negative electrode current collector is also included in the negative electrode of the present invention.

In addition, provided is a battery module comprising the all-solid-state battery as a unit cell, a battery pack comprising the battery module, and a device comprising the battery pack as a power source.

In this case, examples of the above device may comprise, but are not limited to, a power tool powered by an electric motor; electric cars including an electric vehicle (EV), a hybrid electric vehicle (HEV), a plug-in hybrid electric vehicle (PHEV), and the like; electric motorcycles including an electric bike (E-bike) and an electric scooter (E-scooter); an electric golf cart; and a power storage system. Hereinafter, preferred examples are presented to aid understanding of the present invention, but the following examples are only illustrative of the present invention.

In the following Examples and comparative examples, polymer solid electrolytes were prepared depending on the protective layer and the use of freezing/thawing processes, as described in the following Table 1.

**[Table 1]**

| | Protective Layer | | Use of Freezing/Thawing Processes |
|---|---|---|---|
| | Film Type | WVTR (g/m²·day) | |
| Example 1 | COP | 0.5 | Used |
| Example 2 | PET | 15 | Used |
| Example 3 | PAC | 50 | Used |
| Example 4 | TAC | 300 | Used |
| Comparative Example 1 | - | - | Used |
| Comparative Example 2 | COP | 0.5 | Not Used (Simple Drying) |

### Example 1

PVA (Mw: 89,000 g/mol; degree of hydrolysis: >99%) was mixed with water to prepare a 10% aqueous PVA solution. To the aqueous PVA solution, LiTFSI was added, and then stirred to prepare a solution including PVA, which is a polymer having a cross-linkable functional group, and LiTFSI, which is a lithium salt. At this time, a molar ratio ([Li]/[OH]) of "OH", which is the cross-linkable functional group of the PVA, and "Li" of the lithium salt was set to 0.4.

The solution was applied on SS foil, which is a substrate, by a bar coating method to form a coating film, and then, it was frozen at -20 °C for 24 hours and thawed at 25 °C to prepare a polymer solid electrolyte.

On one surface of the polymer solid electrolyte, a cycloolefin polymer (COP) film (Zeon Film, Japan/JEONOR (50 µm)) was laminated as a protective layer to prepare a polymer solid electrolyte laminate. The COP film had a WVTR of 0.5 g/m²·day.

### Example 2

A polymer solid electrolyte laminate was prepared in the same manner as in Example 1, except that a polyethylene terephthalate (PET) film (50 µm, Toyobo, Japan/T-PET) was used as the protective layer. The PET film had a WVTR of 15 g/m²·day.

### Example 3

A polymer solid electrolyte laminate was prepared in the same manner as in Example 1, except that a polyacrylate (PAC) film (50 µm, LG Chem, Korea/JEONOR (50 µm)) was used as the protective layer. The PAC film had a WVTR of 50 g/m²·day.

### Example 4

A polymer solid electrolyte laminate was prepared in the same manner as in Example 1, except that a triacetyl cellulose (TAC) film (LG Chem, Korea/JEONOR (50 µm)) was used as the protective layer. The TAC film had a WVTR of 300 g/m²·day.

### Comparative Example 1

A polymer solid electrolyte that is not a laminate was prepared in the same manner as in Example 1, except that the protective layer was not laminated.

### Comparative Example 2

A polymer solid electrolyte laminate was prepared in the same manner as in Example 1, except that a solution including PVA, which is a polymer having a cross-linkable functional group, and LiTFSI, which is a lithium salt, was coated on SS foil, which is a substrate, and then dried at 80°C.

### Experimental Example 1

The polymer solid electrolyte laminates prepared in the Examples and the Comparative Examples were stored for 72 hours under an environment exposed to moisture, and after removing the protective layer, the mechanical strength, the ionic conductivity, and the amount of change in ionic conductivity (△σᵢ) caused by moisture of the polymer solid electrolyte were measured as follows. The measurement results are as described in the following Table 2.

### (1) Mechanical Strength

Mechanical strength of the polymer solid electrolyte is modulus measured by a dynamic mechanical analysis (DMA) (TA Instrument, RSA3). [Equation 2] ${σ}_{i} = \frac{L}{RA}$

### (2) Ionic Conductivity

In order to measure the ionic conductivity, the polymer solid electrolyte was punched out in a circular shape with a size of 1.7671 cm², and the punched polymer solid electrolyte was placed between two sheets of stainless steel (SS) to prepare a coin cell.

Using an electrochemical impedance spectrometer (EIS, VM3, Bio Logic Science Instrument), the resistance was measured under conditions of an amplitude of 10 mV and a scan range of 500 KHz to 20 MHz at 25 °C, and then, using Equation 2 below, the ionic conductivity of the polymer solid electrolyte was calculated.

### [Equation 2]

In Equation 2 above, σᵢ is the ionic conductivity (S/cm) of the polymer solid electrolyte, R is the resistance (Ω) of the polymer solid electrolyte measured by the electrochemical impedance spectrometer, L is the thickness (µm) of the polymer solid electrolyte, and A means the area (cm²) of the polymer solid electrolyte.

At this time, the ionic conductivity is a value obtained by adding the ionic conductivity by lithium ions and the ionic conductivity by moisture.

### (3) Change amount of Ionic Conductivity Caused by Moisture (Δσₓ, %)

The protective layer formed on the polymer solid electrolyte of Example 1 had a WVTR of 0.5 g/m²·day, and the polymer solid electrolyte of Example 1 represents an ionic conductivity level of a polymer solid electrolyte manufactured under an environment in which moisture is completely blocked. In other words, the ionic conductivity of the polymer solid electrolyte of Example 1 is the same as the ionic conductivity by lithium ions, and the ionic conductivity caused by moisture may be substantially 0.

As shown in Equation 3 below, the change amount of the ionic conductivity caused by moisture (△σₓ) in the ionic conductivity of the polymer solid electrolytes of Examples 2 to 4 and Comparative Example 1 was calculated as a percentage based on the ionic conductivity of the polymer solid electrolyte of Example 1. [Equation 3] ${Δσ}_{x} = \left\{\left({σ}_{x}-{σ}_{Example 1}\right)/{σ}_{Example 1}\right\} \times 100$ wherein, x is Example 2, 3, 4, or Comparative Example 1. For example, Δσ_{Example 2} is the change amount of the ionic conductivity caused by moisture in Example 2 compared to Example 1.

**[Table 2]**

| | Mechanical Strength (kPa) | Ionic Conductivity (S/cm) | Change Amount in Ionic Conductivity Caused by Moisture (△σₓ, %) | Protective Film | WVTR (g/m²·day) | Remarks |
|---|---|---|---|---|---|---|
| Example 1 | 0.07 | 1.6x10⁻⁴ | 0 | COP | 0.5 | - |
| Example 2 | 0.06 | 1.7x10⁻⁴ | 6.3 | PET | 15 | - |
| Example 3 | 0.05 | 2.5x10⁻⁴ | 56.3 | PAC | 50 | - |
| Example 4 | 0.02 | 4.1x10⁻⁴ | 156.3 | TAC | 300 | - |
| Comparative Example 1 | 0.007 | 6.5x10⁻⁴ | 306.3 | - | - | - |
| Comparative Example 2 | - | - | - | - | - | Unable to measure: unable to prepare uniform sample on substrate, unable to peel off sample on substrate due to sticky and brittle sample physical properties |

As described in Table 2 above, it was confirmed that the polymer solid electrolyte with no protective layer as in Comparative Example 1 exhibits mechanical strength (modulus) decreased to about 1/10 and ionic conductivity increased by about 4 times, compared to Example 1 due to moisture absorption when exposed to a moisture environment. However, the ionic conductivity is a result of adding the ionic conductivity by moisture rather than the ionic conductivity of lithium ions relevant to battery performance, and therefore, it is not the ionic conductivity advantageous for physical properties of the polymer solid electrolyte relevant to actual battery performance.

In addition, when performing a simple drying process other than the freezing and thawing processes as in Comparative Example 2, a uniform polymer solid electrolyte sample could not be formed on the substrate. In addition, due to sticky and brittle physical properties of the sample, it was impossible to peel off the sample from the substrate, and thus physical properties also could not be measured.

## Claims

1. A polymer solid electrolyte laminate, comprising:
a polymer solid electrolyte; and
a protective layer formed on at least one surface of the polymer solid electrolyte,
wherein the polymer solid electrolyte comprises a polymer containing a cross-linkable functional group, a lithium salt, and a solvent;
the polymer solid electrolyte comprises a cross-linked structure; and an amorphous polymer chain containing the cross-linkable functional group;
the cross-linked structure comprises (a) a cross-linkage between the cross-linkable functional groups, (b) a cross-linkage between the cross-linkable functional group and the solvent, and (c) a bond between the cross-linkable functional group and the lithium salt;
the solvent comprises water;
the weight average molecular weight (Mw) of the polymer containing a cross-linkable functional group is 80,000 g/mol to 130,000 g/mol;
the cross-linkable functional group comprises a hydroxyl group, and the polymer containing a cross-linkable functional group comprises one or more selected from the group consisting of polyvinyl alcohol (PVA), agar, dextran, and chitosan; and
the molar ratio ([Li]/[G]) of the cross-linkable functional group ([G]) of the polymer and lithium ([Li]) of the lithium salt is exceeding 0.1 and less than 0.5.

2. The polymer solid electrolyte laminate according to claim 1, wherein the protective layer is a polymer film having relatively large modulus compared to the polymer solid electrolyte, or a low-hygroscopic polymer film;
the polymer film having relatively large modulus compared to the polymer solid electrolyte comprises a polyester film, a polycarbonate (PC) film, a polyethylene (PE) film, a polymethyl methacrylate (PMMA) film, a polyetheretherketone (PEEK) film, a polyethylene naphthalate (PEN) film, a polyetherimide (PEI) film, a polyimide (PI) film, a triacetylcellulose (TAC) film, or an elongated polyvinyl alcohol (PVA) film; and
the low-hygroscopic polymer film comprises a cycloolefin polymer (COP) film, a polyethylene terephthalate (PET) film, a polyacrylate (PAC) film, a polyethylene naphthalate (PEN) film, a polyvinylidene chloride (PVDC) film, a polyvinyl chloride (PVC) film, or an ethylene vinyl alcohol copolymer (EVOH) film.

3. The polymer solid electrolyte laminate according to claim 1, wherein the protective layer has a water vapor transmission rate (WVTR) of 50 g/m²·day or less.

4. The polymer solid electrolyte laminate according to claim 1, wherein (a) the cross-linkage between the cross-linkable functional groups comprises a hydrogen bond;
(b) the cross-linkage between the cross-linkable functional group and the solvent comprises a hydrogen bond; and
(c) the bond between the cross-linkable functional group and the lithium salt comprises a bond by a Lewis acid-base interaction.

5. The polymer solid electrolyte laminate according to claim 1, wherein the lithium salt comprises one or more selected from the group consisting of (CF₃SO₂)₂NLi (lithium bis (trifluoromethanesulphonyl) imide, LiTFSI), (FSO₂)₂NLi (lithium bis(fluorosulfonyl)imide, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN, and LiC(CF₃SO₂)₃.

6. The polymer solid electrolyte laminate according to claim 1, wherein the polymer solid electrolyte has a free-standing film form or a coating layer form.

7. The polymer solid electrolyte laminate according to claim 1, wherein the polymer solid electrolyte further comprises a liquid electrolyte.

8. A method for preparing the polymer solid electrolyte laminate according to claim 1, comprising the following steps:
(S1) forming a solution for forming a polymer solid electrolyte by adding a lithium salt to a polymer solution containing a cross-linkable functional group;
(S2) forming a coating film by applying the solution for forming the polymer solid electrolyte on a substrate;
(S3) forming a polymer solid electrolyte by freezing and thawing the coating film; and
(S4) laminating a protective layer on at least one surface of the polymer solid electrolyte;
wherein the freezing is performed at -30°C to -10°C, and
the thawing is performed at 15°C to 35°C.

9. The method according to claim 8, wherein the polymer solid electrolyte comprises a cross-linked structure,
the cross-linked structure comprises (a) a cross-linkage between the cross-linkable functional groups, (b) a cross-linkage between the cross-linkable functional group and solvent, and (c) a bond between the cross-linkable functional group and the lithium salt;
(a) the cross-linkage between the cross-linkable functional groups comprises a hydrogen bond;
(b) the cross-linkage between the cross-linkable functional group and the solvent comprises a hydrogen bond; and
(c) the bond between the cross-linkable functional group and the lithium salt comprises a bond by a Lewis acid-base interaction.

10. An all-solid-state battery comprising the polymer solid electrolyte laminate of any one of claims 1 to 7.

## Patentansprüche

1. Polymer-Festelektrolyt-Laminat, umfassend:
einen Polymer-Festelektrolyt; und
eine Schutzschicht, die auf mindestens einer Oberfläche des Polymer-Festelektrolyten gebildet ist,
wobei der Polymer-Festelektrolyt ein Polymer umfasst, das eine vernetzbare funktionelle Gruppe, ein Lithiumsalz und ein Lösungsmittel enthält;
der Polymer-Festelektrolyt eine vernetzte Struktur; und eine amorphe Polymerkette, die die vernetzbare funktionelle Gruppe enthält, umfasst;
die vernetzte Struktur (a) eine Vernetzung zwischen den vernetzbaren funktionellen Gruppen, (b) eine Vernetzung zwischen der vernetzbaren funktionellen Gruppe und dem Lösungsmittel und (c) eine Bindung zwischen der vernetzbaren funktionellen Gruppe und dem Lithiumsalz umfasst;
das Lösungsmittel Wasser umfasst;
das gewichtsmittlere Molekulargewicht (Mw) des Polymers, das eine vernetzbare funktionelle Gruppe enthält, 80.000 g/mol bis 130.000 g/mol beträgt;
die vernetzbare funktionelle Gruppe eine Hydroxylgruppe umfasst und das Polymer, das eine vernetzbare funktionelle Gruppe enthält, eines oder mehrere ausgewählt aus der Gruppe bestehend aus Polyvinylalkohol (PVA), Agar, Dextran und Chitosan umfasst; und
das Molverhältnis ([Li]/[G]) der vernetzbaren funktionellen Gruppe ([G]) des Polymers und Lithium ([Li]) des Lithiumsalzes größer als 0,1 und kleiner als 0,5 ist.

2. Polymer-Festelektrolyt-Laminat nach Anspruch 1, wobei die Schutzschicht ein Polymerfilm mit einem relativ großen Modul im Vergleich zu dem Polymer-Festelektrolyten oder ein Polymerfilm mit geringer Hygroskopizität ist;
der Polymerfilm mit einem relativ großen Modul im Vergleich zu dem Polymer-Festelektrolyten einen Polyesterfilm, einen Polycarbonat(PC)-Film, einen Polyethylen(PE)-Film, einen Polymethylmethacrylat(PMMA)-Film, einen Polyetheretherketon(PEEK)-Film, einen Polyethylennaphthalat(PEN)-Film, einen Polyetherimid(PEI)-Film, einen Polyimid(PI)-Film, einen Triacetylcellulose(TAC)-Film oder einen verlängerten Polyvinylalkohol(PVA)-Film umfasst; und
der Polymerfilm mit geringer Hygroskopizität einen Cycloolefinpolymer(COP)-Film, einen Polyethylenterephthalat(PET)-Film, einen Polyacrylat(PAC)-Film, einen Polyethylennaphthalat(PEN)-Film, einen Polyvinylidenchlorid(PVDC)-Film, einen Polyvinylchlorid(PVC)-Film oder einen Ethylenvinylalkohol-Copolymer(EVOH)-Film umfasst.

3. Polymer-Festelektrolyt-Laminat nach Anspruch 1, wobei die Schutzschicht eine Wasserdampfdurchlässigkeitsrate (WVTR) von 50 g/m² · Tag oder weniger aufweist.

4. Polymer-Festelektrolyt-Laminat nach Anspruch 1, wobei (a) die Vernetzung zwischen den vernetzbaren funktionellen Gruppen eine Wasserstoffbindung umfasst;
(b) die Vernetzung zwischen der vernetzbaren funktionellen Gruppe und dem Lösungsmittel eine Wasserstoffbindung umfasst; und
(c) die Bindung zwischen der vernetzbaren funktionellen Gruppe und dem Lithiumsalz eine Bindung durch eine Lewis-Säure-Base-Wechselwirkung umfasst.

5. Polymer-Festelektrolyt-Laminat nach Anspruch 1, wobei das Lithiumsalz eines oder mehrere ausgewählt aus der Gruppe bestehend aus (CF₃SO₂)₂NLi(Lithiumbis(trifluormethansulfonyl)imid, LiTFSI), (FSO₂)₂NLi (Lithiumbis(fluorsulfonyl)imid, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN und LiC(CF₃SO₂)₃ umfasst.

6. Polymer-Festelektrolyt-Laminat nach Anspruch 1, wobei der Polymer-Festelektrolyt eine freistehende Filmform oder eine Beschichtungsschichtform aufweist.

7. Polymer-Festelektrolyt-Laminat nach Anspruch 1, wobei der Polymer-Festelektrolyt ferner einen flüssigen Elektrolyten umfasst.

8. Verfahren zur Herstellung des Polymer-Festelektrolyt-Laminats nach Anspruch 1, umfassend die folgenden Schritte:
(S1) Bilden einer Lösung zum Bilden eines Polymer-Festelektrolyten durch Zugeben eines Lithiumsalzes zu einer Polymerlösung, die eine vernetzbare funktionelle Gruppe enthält;
(S2) Bilden eines Beschichtungsfilms durch Aufbringen der Lösung zum Bilden des Polymer-Festelektrolyten auf ein Substrat;
(S3) Bilden eines Polymer-Festelektrolyten durch Einfrieren und Auftauen des Beschichtungsfilms; und
(S4) Laminieren einer Schutzschicht auf mindestens eine Oberfläche des Polymer-Festelektrolyten;
wobei das Einfrieren bei -30°C bis -10°C durchgeführt wird, und
das Auftauen bei 15°C bis 35°C durchgeführt wird.

9. Verfahren nach Anspruch 8, wobei der Polymer-Festelektrolyt eine vernetzte Struktur umfasst,
die vernetzte Struktur (a) eine Vernetzung zwischen den vernetzbaren funktionellen Gruppen, (b) eine Vernetzung zwischen der vernetzbaren funktionellen Gruppe und dem Lösungsmittel und (c) eine Bindung zwischen der vernetzbaren funktionellen Gruppe und dem Lithiumsalz umfasst;
(a) die Vernetzung zwischen den vernetzbaren funktionellen Gruppen eine Wasserstoffbindung umfasst;
(b) die Vernetzung zwischen der vernetzbaren funktionellen Gruppe und dem Lösungsmittel eine Wasserstoffbindung umfasst; und
(c) die Bindung zwischen der vernetzbaren funktionellen Gruppe und dem Lithiumsalz eine Bindung durch eine Lewis-Säure-Base-Wechselwirkung umfasst.

10. Festkörper-Batterie, umfassend das Polymer-Festelektrolyt-Laminat nach einem der Ansprüche 1 bis 7.

## Revendications

1. Stratifié d'électrolyte solide polymère, comprenant :
un électrolyte solide polymère ; et
une couche protectrice formée sur au moins une surface de l'électrolyte solide polymère,
dans lequel l'électrolyte solide polymère comprend un polymère contenant un groupe fonctionnel réticulable, un sel de lithium et un solvant ;
l'électrolyte solide polymère comprend une structure réticulée ; et une chaîne polymère amorphe contenant un groupe fonctionnel réticulable ;
la structure réticulée comprend (a) une réticulation entre les groupes fonctionnels réticulables, (b) une réticulation entre le groupe fonctionnel réticulable et le solvant et (c) une liaison entre le groupe fonctionnel réticulable et le sel de lithium ;
le solvant comprend de l'eau ;
le poids moléculaire moyen en poids (Mw) du polymère contenant un groupe fonctionnel réticulable est 80 000 g/mol à 130 000 g/mol ;
le groupe fonctionnel réticulable comprend un groupe hydroxyle, et le polymère contenant un groupe fonctionnel réticulable comprend un ou plusieurs éléments sélectionnés dans le groupe constitué d'alcool polyvinylique (PVA), agar, dextrane et chitosane ; et
le rapport molaire ([Li]/[G]) du groupe fonctionnel réticulable ([G]) du polymère et du lithium ([Li]) du sel de lithium est supérieur à 0,1 et inférieur à 0,5.

2. Stratifié d'électrolyte solide polymère selon la revendication 1, dans lequel la couche protectrice est un film polymère ayant un module relativement élevé comparé à l'électrolyte solide polymère, ou un film polymère faiblement hygroscopique ;
le film polymère ayant un module relativement élevé comparé à l'électrolyte solide polymère comprend un film de polyester, un film de polycarbonate (PC), un film de polyéthylène (PE), un film de polyméthyle méthacrylate (PMMA), un film de polyétheréthercétone (PEEK), un film de polyéthylène naphtalate (PEN), un film de polyétherimide (PEI), un film de polyimide (PI), un film de triacétylcellulose (TAC) ou un film d'alcool polyvinylique allongé (PVA) ; et
le film polymère faiblement hygroscopique comprend un film polymère de cyclo-oléfine (COP), un film de polyéthylène téréphtalate (PET), un film de polyacrylate (PAC), un film de polyéthylène naphtalate (PEN), un film de chlorure de polyvinylidène (PVDC), un film de chlorure de polyvinyle (PVC) ou un film de copolymère d'éthylène-alcool vinylique (EVOH).

3. Stratifié d'électrolyte solide polymère selon la revendication 1, dans lequel la couche protectrice a un taux de transmission de vapeur d'eau (WVTR) égal ou inférieur à 50 g/m²·jour.

4. Stratifié d'électrolyte solide polymère selon la revendication 1, dans lequel (a) la réticulation entre les groupes fonctionnels réticulables comprend une liaison hydrogène ;
(b) la réticulation entre le groupe fonctionnel réticulable et le solvant comprend une liaison hydrogène ; et
(c) la liaison entre le groupe fonctionnel réticulable et le sel de lithium comprend une liaison par une interaction acide-base de Lewis.

5. Stratifié d'électrolyte solide polymère selon la revendication 1, dans lequel le sel de lithium comprend un ou plusieurs éléments sélectionnés dans le groupe constitué de (CF₃SO₂)₂NLi(lithium bis(trifluorométhanesulphonyl)imide, LiTFSI), (FSO₂)₂NLi (lithium bis(fluorosulfonyl)imide, LiFSI), LiNO₃, LiOH, LiCl, LiBr, LiI, LiClO₄, LiBF₄, LiB₁₀Cl₁₀, LiPF₆, LiCF₃SO₃, LiCF₃CO₂, LiAsF₆, LiSbF₆, LiAlCl₄, CH₃SO₃Li, CF₃SO₃Li, LiSCN et LiC(CF₃SO₂)₃.

6. Stratifié d'électrolyte solide polymère selon la revendication 1, dans lequel l'électrolyte solide polymère a la forme d'un film autonome ou la forme d'une couche de revêtement.

7. Stratifié d'électrolyte solide polymère selon la revendication 1, dans lequel l'électrolyte solide polymère comprend en outre un électrolyte liquide.

8. Procédé de préparation du stratifié d'électrolyte solide polymère selon la revendication 1, comprenant les étapes suivantes consistant à :
(S1) former une solution pour former un électrolyte solide polymère en ajoutant un sel de lithium à une solution polymère contenant un groupe fonctionnel réticulable ;
(S2) former un film de revêtement en appliquant la solution pour former l'électrolyte solide polymère sur un substrat ;
(S3) former un électrolyte solide polymère en congelant et décongelant le film de revêtement ; et
(S4) stratifier une couche protectrice sur au moins une surface de l'électrolyte solide polymère ;
dans lequel la congélation est effectuée de -30°C à -10°C, et
la décongélation est effectuée de 15°C à 35°C.

9. Procédé selon la revendication 8, dans lequel l'électrolyte solide polymère comprend une structure réticulée,
la structure réticulée comprend (a) une réticulation entre les groupes fonctionnels réticulables, (b) une réticulation entre le groupe fonctionnel réticulable et un solvant et (c) une liaison entre le groupe fonctionnel réticulable et un sel de lithium ;
(a) la réticulation entre les groupes fonctionnels réticulables comprend une liaison hydrogène ;
(b) la réticulation entre le groupe fonctionnel réticulable et le solvant comprend une liaison hydrogène ; et
(c) la liaison entre le groupe fonctionnel réticulable et le sel de lithium comprend une liaison par une interaction acide-base de Lewis.

10. Batterie tout-solide comprenant le stratifié d'électrolyte solide polymère selon l'une quelconque des revendications 1 à 7.
